# EUROPEAN PATENT SPECIFICATION

(11) **EP 2 434 833 B1**
(45) Date of publication and mention of the grant of the patent: **28.08.2013**
(21) Application number: 10777328.5
(22) Date of filing: 04.05.2010
(51) Int. Cl.: H04W 88/14, H04W 92/02, H04L 29/06

(54) **METHOD, SYSTEM AND NETWORK DEVICE FOR EVOLVING CIRCUIT SWITCHED DOMAIN CORE NETWORK**
VERFAHREN, SYSTEM UND NETZWERKGERÄT ZUR HERSTELLUNG EINES LEITUNGSVERMITTELTEN DOMÄNENKERNNETZWERKS
PROCÉDÉ, SYSTÈME ET DISPOSITIF RÉSEAU DESTINÉS À FAIRE ÉVOLUER UN RÉSEAU CENTRAL DE DOMAINE À COMMUTATION PAR CIRCUITS

(30) Priority: 22.05.2009 CN 200910107618
(43) Date of publication of application: 28.03.2012
(73) Proprietor: Huawei Technologies Co., Ltd., Shenzhen, Guangdong 518129 (CN)
(72) Inventor: ZHU, Haopeng, Shenzhen Guangdong 518129 (CN); JIANG, Tao, Shenzhen Guangdong 518129 (CN); CHEN, Guorong, Shenzhen Guangdong 518129 (CN); LI, Shijun, Shenzhen Guangdong 518129 (CN); WANG, Yongde, Shenzhen Guangdong 518129 (CN); CHEN, Qunhui, Shenzhen Guangdong 518129 (CN)
(74) Representative: Isarpatent
(86) International application number: PCT/CN2010/072406
(87) International publication number: WO 2010/133124

(56) References cited:
- CN-A- 1 859 426
- CN-A- 1 941 933
- CN-A- 101 572 967
- US-A1- 2007 197 227
- "3rd Generation Partnership Project; Technical Specification Group Services and System Aspects; IP Multimedia Subsystem (IMS) centralized services; Stage 2 (Release 9)", 3GPP STANDARD; 3GPP TS 23.292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 1 March 2009 (2009-03-01), pages 1-104, XP050363564,
- "3rd Generation Partnership Project; Technical Specification Group Services and Systems Aspects; Network architecture (Release 8)", 3GPP STANDARD; 3GPP TS 23.002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 December 2008 (2008-12-01), pages 1-88, XP050361687,
- YOSHIDA N ET AL: "A proposal for a 3G-CS integrated network call control procedure based on IMS", 2008 14TH ASIA-PACIFIC CONFERENCE ON COMMUNICATIONS : (APCC) ; AKIHABARA, TOKYO, JAPAN, 14 - 16 OCTOBER 2008, IEEE, PISCATAWAY, NJ, USA, 14 October 2008 (2008-10-14), pages 1-5, XP031417995, ISBN: 978-4-88552-232-1
- NEC: "Architecture proposal for IMS Centralized Services", 3GPP DRAFT; S2-070059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Florence; 20070109, 9 January 2007 (2007-01-09), XP050258874, [retrieved on 2007-01-09]

## Description

### FIELD OF THE INVENTION

The present invention relates to the field of communications technologies, and in particular, to a method and a system for Circuit-Switched (CS) core network evolution, and a network device.

### BACKGROUND OF THE INVENTION

The traditional CS domain is configured to provide circuit-specific service connections for a user. A Mobile Switching Center (MSC) in the CS domain is responsible for switching of a CS service and signaling control. In an architecture in which the bearer function and the control function are separated from each other, the MSC may be divided into an MSC server (MSC-S) and a CS Media Gateway (CS-MGW). The CS domain further includes devices such as a Home Location Register (HLR), and a Visitor Location Register (VLR). The MSC-S is a core device of a CS core network, and is configured to provide processing logic of a CS service.

An IP Multimedia subsystem (IMS) is a subsystem overlaid on a Packet-Switched (PS) network by a 3rd Generation Partnership Project (3GPP). The IMS uses an IP packet domain as a channel that bears its control signaling and media transmission, and introduces a Session Initiation Protocol (SIP) as a service control protocol. By utilizing characteristics of the SIP, such as simplicity, extensibility, and convenient combination of media, the IMS realizes separation between service management, session control, and bearer access, and provides diversified multimedia services. Main functional entities in the IMS include: a Call Session Control Function (CSCF), which is configured to perform a function such as user registration control and session control; a Home Subscriber Server (HSS), which is configured to manage subscription data of a user in a centralized way; and an Application Server (AS), which provides various service logic control functions.

Due to the foregoing advantages of the IMS, the traditional CS network is bound to evolve toward the IMS to provide more new services for a user. To converge the CS network with the IMS network and provide a service for a CS user through the IMS, the 3GPP defines an implementation solution of IMS Centralized Services (ICS), which upgrades the MSC-S to an MSC-S Enhanced for ICS (EMSC). After the user accesses the network through the CS domain, the EMSC simulates a SIP User Agent (UA), which gets registered to the IMS on behalf of the user. For a user who has subscribed to an ICS service, all CS services are routed to the IMS through the EMSC, and the CSCF in the IMS network routes the services to a Telephony Application Server (TAS) for processing. The EMSC primarily provides a function of conversion from an A/Iu interface to an SIP, and possesses part of functions of a Proxy CSCF (P-CSCF).

To implement traditional CS services, the TAS in the IMS needs to inherit all service processing capabilities in the existing CS network, including voice service, data, fax, Short Message Service (SMS), intelligent service, and monitoring. In this way, the TAS needs to involve plenty of repeated development work. For customized services which are specific to an operator, it is more difficult for the TAS to implement these services. Moreover, after the MSC-S is upgraded to the EMSC, the performance is basically unchanged, but the operator needs to invest a TAS for providing traditional CS services, which means that the operator makes a repeated TAS investment in an existing CS service. Therefore, both the operator and an equipment provider have to invest twice in a CS service, which causes a waste of resources.

"3rd Generation Partnership Project; Technical Specification Group Services and System Aspects; IP Multimedia Subsystem (IMS) centralized services; Stage 2(Release 9)", 3GPP STANDARD; 3GPP TS 23.292, , V9.1.0, 1 March 2009 , pages 1-104, discloses architectural requirements for delivery of IMS services to CS users.

"3rd Generation Partnership Project; Technical Specification Group Services and System Aspects; Network architecture; (Release 8), 3GPP STANDARD; 3GPP TS 23.002; V8.4.0, 1 December 2008, pages 1-88, pages, 1-104, discloses an architecture of a 3GPP system covering both UTRAN and GERAN radio access technologies.

YOSHIDA N ET AL: "A proposal for 3 a3G-CS integrated network call control procedure based on IMS", 2008 14th ASIA-PACIFIC CONFERENCE ON COMMUNICATIONS; (APCC); AKIHABARA, TOKYO, JAPAN, 14-16 OCTOBER 2008, IEEE, , pages 1-5, discloses a network architecture for providing 3G-CS services using IMS integrated controls.

NEC: "Architecture proposal for IMS centralized services", 3GPP DRAFT; S2-070059, vol. SA WG2, no. Florence; 20070109, 9 January 2007, discloses an interworking of MSC-S with MGCF.

### SUMMARY OF THE INVENTION

The invention is defined by the independent claims and their corresponding dependent claims. Embodiments of the present invention provide a method and a system for CS core network evolution, and a network device so that, without redeveloping a TAS for processing a traditional CS service, an IMS network may provide an IMS user with an existing CS service, provide a CS user with the existing CS service and a new service in the IMS network, and converge the CS network with the IMS network.

An embodiment of the present invention provides a method for CS core network evolution, including:
connecting, by a Mobile Switching Center Server (MSC-S) Enhanced for IMS Centralized Services (ICS) (EMSC), to an IP Multimedia Subsystem (IMS) network, and serving as a Telephony Application Server (TAS) in the IMS network to provide a voice service for a user in the IMS network, wherein the EMSC is obtained by upgrading a Mobile Switching Center Server (MSC-S) in a CS core network and possesses functions of the TAS in the IMS network, wherein the upgrading comprises enhancing a communication interface between the EMSC and a Call Session Control Function, CSCF, in the IMS network on the basis of an original MSC-S, wherein the EMSC is capable of processing Session Initiation Protocol, SIP, messages and provides service processing logic of the TAS in the IMS network by using existing service processing logic of the MSC-S; and
performing, by the EMSC, service processing on a service request for an existing service, and sending a service request for a new service to a corresponding application server in the IMS network for processing, wherein the service request for the existing service and the service request for the new service are initiated by a CS user who has subscribed to the new service; wherein
the existing service comprises a service that can be processed by the EMSC by using functions of the original MSC-S, and the new service comprises a new service provided by the IMS network.

An embodiment of the present invention provides a network device. The network device is obtained by upgrading a Mobile Switching Center Server (MSC-S) in a Circuit-Switched (CS) core network, and is equivalent to a Telephony Application Server (TAS) in an IP Multimedia Subsystem (IMS) network, wherein the upgrading comprises enhancing a communication interface between the EMSC and a Call Session Control Function, CSCF, in the IMS network on the basis of an original MSC-S, wherein the EMSC is capable of processing Session Initiation Protocol, SIP, messages and provides service processing logic of the TAS in the IMS network by using existing service processing logic of the MSC-S.

The network device comprises:
an IMS interface unit, configured to exchange information with an other device in the IMS network;
a CS interface unit, configured to exchange information with a device in a CS network; and
a service processing unit, configured to: provide a voice service for a user in the IMS network after the IMS interface unit or the CS interface unit receives a service request from the user; perform service processing on the service request for an existing service; and send the service request for a new service to a corresponding application server in the IMS network for processing, wherein the service request for the existing service and the service request for the new service are initiated by a CS user who has subscribed to the new service; wherein
the existing service comprises a service that can be processed by the EMSC by using functions of the original MSC-S, and the new service comprises a new service provided by the IMS network.

An embodiment of the present invention provides a system for CS core network evolution. The system comprises:
a Mobile Switching Center Server (MSC-S) Enhanced for IMS Centralized Services (ICS) (EMSC), wherein the EMSC is obtained by upgrading a Mobile Switching Center Server (MSC-S) in a CS core network and possesses functions of a Telephony Application Server (TAS) in the IMS network, wherein the upgrading comprises enhancing a communication interface between the EMSC and a Call Session Control Function, CSCF, in the IMS network on the basis of an original MSC-S, wherein the EMSC is capable of processing Session Initiation Protocol, SIP, messages and provides service processing logic of the TAS in the IMS network by using existing service processing logic of the MSC-S, and the system further comprises a Call Session Control Function (CSCF) of an IP Multimedia Subsystem (IMS) network.

The CSCF in the IMS network is configured to send a received voice service request from a user in the IMS network to the EMSC.

The EMSC is configured to connect to the IMS network and serves as the TAS in the IMS network to provide a voice service for the user in the IMS network; the EMSC is further configured to: receive a service request sent by a CS user, perform service processing on the service request for an existing service, and send the service request for a new service to a corresponding application server in the IMS network for processing, wherein the service request for the existing service and the service request for the new service are initiated by the CS user who has subscribed to the new service.

The existing service comprises a service that can be processed by the EMSC by using functions of the original MSC-S, and the new service comprises a new service provided by the IMS network.

Through the method for CS core network evolution, the system for CS core network evolution, and the network device provided in the embodiments of the present invention, the MSC-S in the CS core network is upgraded to an EMSC that possesses functions of a TAS in an IMS network. Therefore, the EMSC may serve as a TAS in the IMS network to provide a voice service for a user in the IMS network, provide an existing service for a CS user at the same time, and send the service request for a new service to the corresponding application server in the IMS network for processing. In this way, the service processing capabilities of the MSC-S in the CS core network are reused, and it is unnecessary to redevelop a TAS in the IMS network, which protects the operator's investment in a CS service, and reduces development costs and investments; moreover, the EMSC reuses the service processing logic of the original MSC-S, and inherits a processing procedure of an existing CS service inherently, which ensures consistency of service experience.

Embodiments of the present invention further provide a method and a system for providing a voice service in an IMS network, and a TAS to provide an existing CS service for a user in an IMS network without redeveloping a TAS in the IMS network.

An embodiment of the present invention provides a method for providing a voice service in an IMS network. The method includes:
receiving, by a Telephony Application Server (TAS) in the IMS network, a voice service request from a user; when determining that the voice service is an existing service, performing service processing, and when determining that the voice service is a new service, sending the service request to a corresponding application server in the IMS network for processing, wherein the TAS is obtained by upgrading a Mobile Switching Center Server (MSC-S) in a Circuit-Switched (CS) core network and communicates through a communication interface between the TAS and a Call Session Control Function (CSCF) in the IMS network; wherein
the existing service comprises a service that can be processed by an original MSC-S, and the new service comprises a new service provided by the IMS network.

An embodiment of the present invention provides a TAS in an IMS network. The TAS is obtained by upgrading a Mobile Switching Center Server (MSC-S) in a Circuit-Switched (CS) core network. The TAS comprises:
an IMS interface unit, configured to exchange information with a Call Session Control Function, CSCF in the IMS network; and
a service processing unit, configured to: receive a user's voice service request through the IMS interface unit; when determining that the service request is an existing service, perform processing on the service request, and when determining that the service request is a new service, send the service request to a corresponding application server in the IMS network for processing, wherein:
   the existing service comprises a service that can be processed by the EMSC by using functions of an original MSC-S, and the new service comprises a new service provided by the IMS network.

An embodiment of the present invention further provides an IMS network system for providing a voice service. The network system includes a TAS and a CSCF in an IMS network.

The TAS is obtained by upgrading a Mobile Switching Center Server (MSC-S) in a Circuit-Switched (CS) core network and is configured to: exchange information with the CSCF in the IMS network; after receiving a service request from a user, determining whether the service is an existing service or a new service; if the service is the existing service, perform processing on the service request; and if the service is the new service, send the service request to a corresponding application server in the IMS network for processing.

The CSCF is configured to receive the service request from the user, and send a voice service request to the TAS for processing; wherein
the existing service comprises a service that can be processed by the EMSC by using functions of an original MSC-S, and the new service comprises a new service provided by the IMS network.

### BRIEF DESCRIPTION OF THE DRAWINGS

FIG. 1 is a network architecture diagram of an ICS implementation defined by the 3GPP in the prior art;
FIG. 2 is an architecture diagram of CS core network evolution according to an embodiment of the present invention;
FIG. 3 is a structural diagram of a network device according to an embodiment of the present invention;
FIG. 4A is a schematic diagram of a CS core network evolution system according to an embodiment of the present invention;
FIG. 4B is another schematic diagram of a CS core network evolution system according to an embodiment of the present invention;
FIG. 5 is an architecture diagram of a system for providing a voice service in an IMS network according to an embodiment of the present invention;
FIG. 6 is a structural diagram of a TAS in an IMS network according to an embodiment of the present invention;
FIG. 7 is a schematic diagram of an IMS network system for providing a voice service according to an embodiment of the present invention;
FIG. 8 is a flowchart of a VoBB user initiating an existing service;
FIG. 9A is a flowchart of a VoBB user initiating a new service;
FIG. 9B is another flowchart of a VoBB user initiating a new service;
FIG. 10A is a flowchart of a CS user initiating an existing service;
FIG. 10B is another flowchart of a CS user initiating an existing service;
FIG. 11A is a flowchart of a CS user initiating a new service;
FIG. 11B is another flowchart of a CS user initiating a new service; and
FIG. 12 is another flowchart of a CS user initiating a service.

### DETAILED DESCRIPTION OF THE EMBODIMENTS

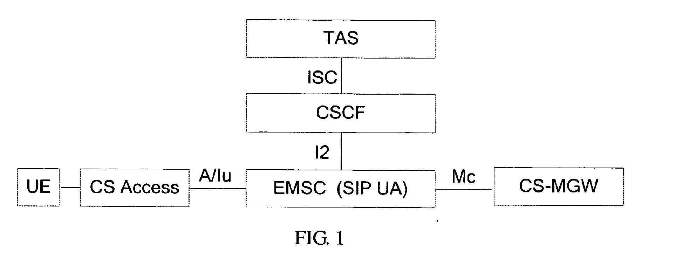

In the embodiment of the present invention, FIG. 1 is an architecture diagram about implementing ICS, in which an MSC-S is upgraded to an EMSC. After a user accesses a network through a CS domain, the EMSC simulates a SIP UA, which gets registered to the IMS on behalf of the user. For a user who has subscribed to an ICS service, all CS services are routed to the IMS through the EMSC, and a CSCF in the IMS network routes the services to a TAS for processing. The EMSC primarily provides a function of conversion from an A/Iu interface to an SIP, and possesses part of functions of a P-CSCF.

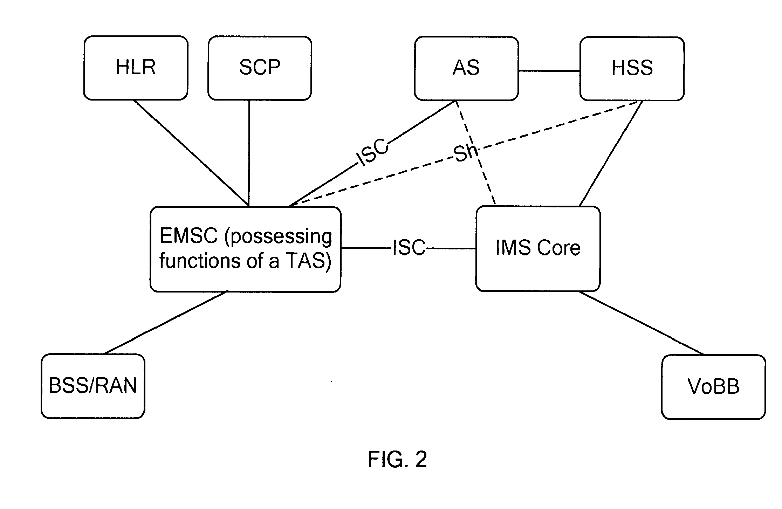

FIG. 2 is an architecture diagram of CS core network evolution according to an embodiment of the present invention. As shown in FIG. 2, an MSC-S in an original CS core network is upgraded to an EMSC. The EMSC not only possesses functions of an original MSC-S, but also possesses functions of a TAS in an IMS network. The EMSC retains interfaces between the original MSC-S and other CS network devices. For example, the interfaces between the original MSC-S and the Base Station Subsystem (BSS)/Radio Access Network (RAN), between the original MSC-S and HLR, and between the original MSC-S and Service Control Platform (SCP). As the TAS in the IMS network, the EMSC enhances an ICS interface between the EMSC and an IMS core network. The main network device in the IMS core network is a CSCF, and a user in the IMS network includes a Voice Over Broadband (VoBB) user. In this embodiment of the present invention, VoBB users include VoBB (EVBO), VoBB (HSPA), VoBB (HSPA+), VoBB (LTE), VoBB (WiMAX), VoBB (WiFi), and VoBB (GEN). For example, VoBB (LTE) refers to a VoBB user in a Long Term Evolution (LTE) network. The meanings of other users are similar to VoBB (LTE).

In the architecture shown in FIG. 2, an embodiment of the present invention provides a method for CS core network evolution, including:
upgrading an MSC-S in a CS core network to an EMSC that possesses functions of a TAS in an IMS network, connecting the EMSC with the IMS network, using the EMSC as the TAS in the IMS network to provide a voice service for a user in the IMS network;
performing, by the EMSC, service processing on a service request for an existing service, and sending a service request for a new service to a corresponding application server in the IMS network for processing, where the service request for an existing service and the service request for a new service are initiated by a CS user who has subscribed to a new service; where
the existing service includes a service that can be processed by an original MSC-S, and the new service includes a new service provided by the IMS network. For example, the new service includes green call, One Number Link You (ONLY), and mobile IP Centrex.

The method of upgrading the MSC-S to the EMSC which possesses functions of the TAS in the IMS network may specifically be: On the basis of the original functions of the MSC-S, a communication interface is enhanced between the EMSC and the CSCF in the IMS network; the EMSC is capable of processing SIP messages, and provides service processing logic of the TAS in the IMS network by using the original service processing logic of the MSC-S.

The method of using the EMSC as the TAS in the IMS network to provide a voice service for a user in the IMS network may specifically be: The EMSC receives a voice service request from an IMS network user sent by the CSCF in the IMS network, the EMSC performs service processing on the voice service request when determining that the voice service request is a service request for an existing service, and when determining that the voice service request is a service request for a new service, the EMSC sends the service request to a corresponding application server for processing. After receiving the voice service request sent by a user in the IMS network, the CSCF may send, through a standard iFC trigger mode, the voice service request to the EMSC for processing. The EMSC serves as a voice service anchor in the IMS network to perform processing on a voice service. A user in the network may be a broadband voice user.

The EMSC may use the following two modes to perform service processing on the service request initiated by a CS user who has subscribed to a new service:
Mode 1: After receiving a service request initiated by a CS user who has subscribed to a new service, the EMSC judges whether the service request is a service request for an existing service or a new service; if the service request is a service request for the existing service, the EMSC performs processing on the service request (using the functions of the original MSC-S actually); if the service request is a service request for the new service, the EMSC determines, according to the type of the service request, that the service request may be processed on a local application server, and therefore, sends the service request to the corresponding application server in a visited IMS network. In this processing mode, the EMSC is required to further enhance certain functions of the CSCF in the IMS network, or the EMSC is converged with the CSCF in the IMS network. Primarily, the EMSC needs to be capable of obtaining the new service subscription data of the user in the IMS network, and capable of simple iFC triggering. In this embodiment, the EMSC may obtain the new service subscription data of the user in the IMS network from an HSS in the IMS network in the process of user registration or location update. In this way, the EMSC is capable of judging whether the service initiated by the CS user is the existing service or the new service. The process of inserting subscription data from the HSS into the CSCF in the process of user registration or location update is a standard procedure, and is not detailed here any further.

The service processing in a standard IMS architecture needs to be anchored to an application server in a home area for processing. Through mode 1 described above, anchor cancellation and floating of the TAS are accomplished, which prevents routing the service request to a home IMS network, and improves processing efficiency and service distribution flexibility.

Mode 2: After receiving a service request initiated by a CS user who has subscribed to a new service, the EMSC determines, according to the subscription data of the user, that the user has subscribed to a new service, and therefore, routes the service request to the CSCF in the IMS network. According to the type of the service request, the CSCF sends the service request to the corresponding application server in the IMS network for processing. If the type of the service request is a voice service request, the CSCF sends the voice service request to the EMSC that serves as the TAS, and the EMSC determines whether the voice service is an existing service or a new service. If the voice service is the existing service, the EMSC performs processing on the voice service request; if the voice service is the new service, the EMSC sends the voice service request to a corresponding application server for processing.

In this method, the service data of an existing service of a CS user and an IMS user may be stored in an HLR in the CS network, the service data of a new service of a CS user and an IMS user may be stored in an HSS in the IMS network, and the subscription data of the user may be set in the HLR or HSS at the time of subscription. The HLR may be converged with the HSS.

Through mode 2 described above, the EMSC provides an existing voice service for both a traditional CS user and a new IMS user. The existing voice service is terminated at the EMSC that possesses functions of a TAS.

Through the method for CS core network evolution provided in this embodiment of the present invention, the MSC-S in the CS core network is upgraded to the EMSC that possesses functions of the TAS of the IMS network. Therefore, the EMSC may serve as the TAS in the IMS network to provide a voice service for a user in the IMS network, also provide an existing service for a CS user, and send the user's a service request for a new service to the corresponding application server in the IMS network for processing. In this way, the service processing capabilities of the MSC-S in the CS core network are reused, and it is unnecessary to redevelop the TAS in the IMS network, which protects the operator's investment in a CS service, and reduces development costs and investments; moreover, the EMSC reuses the service processing logic of the original MSC-S, and inherits a processing procedure of an existing CS service inherently, which ensures consistency of service experience.

To implement a CS service of a CS user in an IMS network in a standard-defined ICS architecture, all service data of the CS user needs to be migrated to the HSS in the IMS network, and an existing charging function, intelligent service, and Color Ring Back Tone (CRBT) platform interface also need to be migrated to a new TAS. The migration of service data and the network adjustment involve huge workload, network consolidation is costly, and long-term coexistence of the HLR and the HSS makes it rather difficult to synchronize data. However, through the method for CS core network evolution provided in the embodiment of the present invention, the service data of an existing service of the CS user remains unchanged; the charging function, the intelligent service, and the CRBT platform interface need no change, which makes the solution highly practicable; the costs involved in network consolidation and network maintenance are much lower than the costs involved in the ICS architecture; and the network maintenance is easier.

In the standard-defined ICS architecture, all voice services initiated by a CS user who has subscribed to the ICS are anchored to the IMS domain, and a majority of services initiated by some CS users may still be traditional existing voice services, which need to be routed deviously to the IMS domain for processing. Meanwhile, because the IMS is less efficient in processing a voice service than the MSC-S in the CS core network, the efficiency of processing a voice service is lower. However, through the CS core network evolution method provided in the embodiment of the present invention, the EMSC judges whether the service type is an existing service or a new service, and directly performs processing on an existing service without routing them to the IMS network, which improves efficiency of processing a voice service.

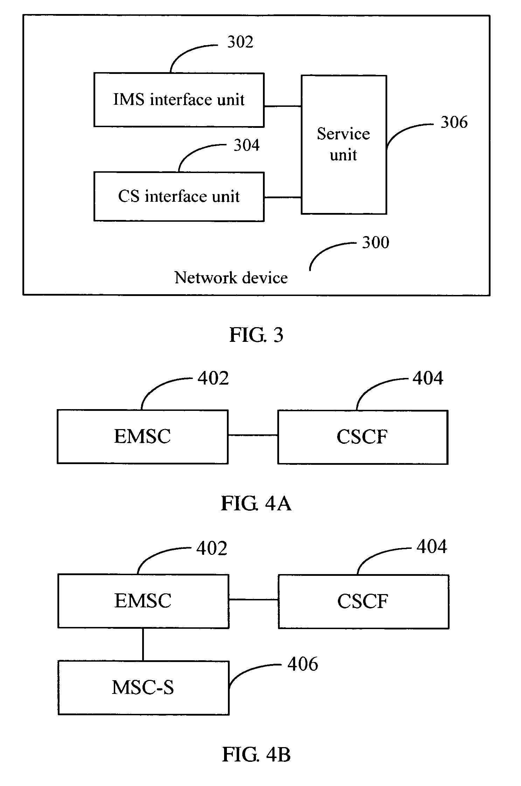

FIG. 3 is a structural diagram of a network device 300 according to an embodiment of the present invention. The network device corresponds to an EMSC in the foregoing method, and is obtained by upgrading an MSC-S in a CS core network and is equivalent to a TAS in an IMS network. For the detailed functions of the network device, refer to the description in the foregoing method embodiment. The network device 300 includes:
an IMS interface unit 302, configured to exchange information with an other device in the IMS network, for example, exchange information with a CSCF in the IMS network through an ICS interface, and receive a user's service request from the CSCF;
a CS interface unit 304, configured to exchange information with a device in a CS network, for example, exchange information with a BSS/RAN, an HLR or an SCP, and receive a service request from a CS user through the BSS/RAN; and
a service processing unit 306, configured to: provide a voice service for a user in the IMS network after the IMS interface unit 302 or the CS interface unit 304 receives a service request from the user; and perform service processing on a service request for an existing service, and send a service request for a new service to a corresponding application server in the IMS network for processing, where the service request for an existing service and the service request for a new service are initiated by a CS user who has subscribed to a new service; where
the existing service includes a service that can be processed by an original MSC-S, and the new service includes a new service provided by the IMS network.

As regards how the service processing unit 306 processes a service request, refer to the description in the foregoing method embodiment.

The providing, by the service processing unit 306, a voice service for a user in the IMS network comprises: receiving, by the service processing unit 306, a voice service request from an IMS network user sent by the IMS interface unit; when determining that the voice service request is a service request for an existing service, performing service processing on the voice service request; and when determining that the voice service request is a service request for a new service, sending the service request to a corresponding application server for processing.

The performing, by the service processing unit 306, service processing on a service request for an existing service, where the service request for an existing service is initiated by a CS user who has subscribed to a new service, comprises: after receiving a service request initiated by a CS user who has subscribed to a new service through the CS interface unit 304, determining, by the service processing unit, that the service request is a service request for an existing service, and performing processing on the service request by using certain functions of the CSCF, which is detailed in the foregoing method embodiment; or, determining, according to the subscription data of the user, that the user has subscribed to a new service, and routing the service request to the CSCF in the IMS network so as to enable the CSCF to determine the service request is a voice service request and send the voice service request to the service processing unit 306 through an IMS interface unit 302; after receiving the voice service request, determining, by the service processing unit 306, that the voice service is an existing service, and performing service processing on the voice service request.

The sending, by the service processing unit 306, the service request for a new service from a CS user who has subscribed to a new service to the corresponding application server of the IMS network comprises: after receiving a service request initiated by a CS user who has subscribed to a new service through a CS interface unit 304, determining that the service request is a service request for a new service, sending, by the service processing unit, the service request to a corresponding application server in the visited IMS network for processing according to the type of the service request, which requires the service processing unit 306 to possess certain functions of the CSCF (refer to the description in the foregoing method embodiment); or
after receiving a service request initiated by a CS user who has subscribed to a new service through the CS interface unit 304, determining, by the service processing unit 306, according to the subscription data of the user, that the user has subscribed to a new service, and routing the service request to the CSCF in the IMS network so as to enable the CSCF to send the service request to the corresponding application server in the IMS network according to the type of the service request, and if the service request is a voice service request, to send the voice service request to the service processing unit 306 through an IMS interface unit 302; determining, by the service processing unit 306, that the voice service is a new service, and sending the service request for a new service to the corresponding application server for processing.

When handling an existing service, the service processing unit 306 performs processing on the existing service according to the existing service processing logic of the original MSC-S.

FIG. 4A is a schematic diagram of a system for CS core network evolution according to an embodiment of the present invention. The system includes an EMSC 402 and a CSCF 404 in an IMS network. The EMSC is obtained by upgrading an MSC-S in a CS core network and possesses functions of a TAS in the IMS network.

The CSCF 404 in the IMS network is configured to send the received voice service request from a user in the IMS network to the EMSC 402.

The EMSC 402 is configured to connect to the IMS network and serve as the TAS in the IMS network to provide a voice service for the user in the IMS network; the EMSC 402 is further configured to receive a service request sent by a CS user, perform service processing on a service request for an existing service, and send a service request for a new service to a corresponding application server in the IMS network, where the service request for an existing service and the service request for a new service are initiated by a CS user who has subscribed to a new service; where
the existing service includes a service that can be processed by an original MSC-S, and the new service includes a new service provided by the IMS network.

The detailed service processing logic of the EMSC 402 is the same as the service processing logic described in the foregoing embodiment of the method for CS core network evolution, which are not repeatedly described here for simplicity of description. For the detailed implementation of the EMSC 402, refer to the network device described in the embodiments of the present invention, which is not repeatedly described here.

FIG. 4B is another schematic diagram of a system for CS core network evolution according to an embodiment of the present invention. On the basis of the system shown in FIG. 4A, the system further includes one or more MSC-Ss 406 of a CS core network (FIG. 4B illustrates only one MSC-S). The one or more MSC-Ss are configured to send the received service request initiated by a CS user who has subscribed to a new service to the EMSC 402. After receiving the service request, the EMSC 402 performs processing on the service request. For a new service, the service processing logic is the same as the processing logic described in the method embodiment and the processing logic of the EMSC 406 shown in FIG. 4A; for an existing service, the EMSC 402 needs to route the service request back to the MSC-S 406, and the MSC-S 406 performs processing on the service request.

The system provided in FIG. 4B may upgrade only one MSC-S 406 or few MSC-Ss 406 to an EMSC 406 in the process of converging the CS network with the IMS network, and other MSC-Ss 406 send the service request from the CS user who has subscribed to a new service to the EMSC 406, and the EMSC performs uniform processing on the service request from the user who has subscribed to a new service, which minimizes consolidation of the existing network devices and reduces costs of network consolidation.

In the network device and the system for CS core network evolution provided in the embodiments of the present invention, the MSC-S 406 in the CS core network is upgraded to the EMSC 406. Because the same technologies are applied, the benefits brought by the network device and the evolved system are the same as the benefits brought by the method embodiment described above.

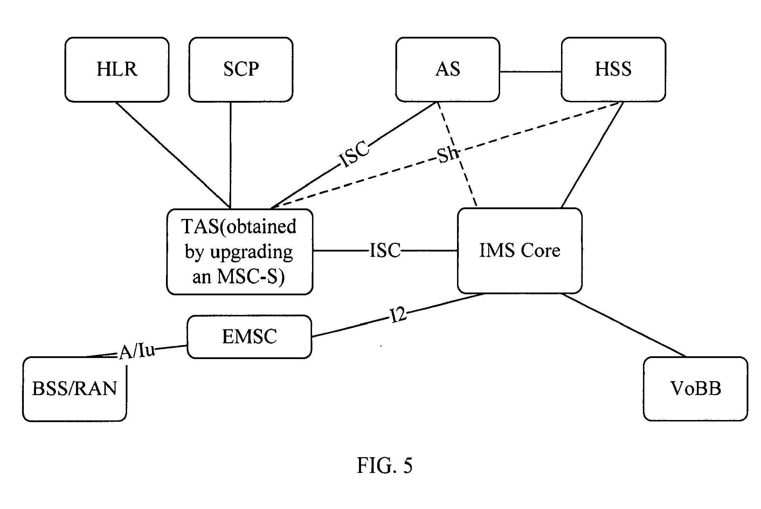

FIG. 5 is an architecture diagram of a system for providing a voice service in an IMS network according to an embodiment of the present invention. As shown in FIG. 5, a TAS that provides a voice service in the IMS network is obtained by upgrading an MSC-S in a CS core network. The TAS does not receive a service request from a CS network directly, but serves as an application server in the IMS network and receives a user's service request from a CSCF in the IMS network. The service request includes a service request initiated by an IMS user (such as a VoBB user shown in the figure), and a service request initiated by a CS user in an ICS architecture through the IMS network. In the network evolution process, the TAS may retain interfaces between an original MSC-S and an HLR or SCP in the CS network, and service data of an existing service of some users may be stored in the HLR in the CS network. After the network evolves to a certain stage, the subscription data of all users in the network is stored in an HSS in the IMS network, and the TAS does not need to interact with devices (such as the HLR) in the CS network any longer.

In a standard-defined ICS architecture, the MSC may be upgraded to an EMSC (simulating a SIP UA) as shown in FIG. 5. There are two other types of standard ICS architecture. One ICS architecture is: A User Equipment (UE) in the CS network is upgraded to interact with the TAS in the IMS network directly, exercise signaling control for a CS voice service, and complete a voice service request. The other ICS architecture is: The UE traverses a PS domain through a Gm interface, and then interacts with the TAS through an IMS core network and exercises signaling control for a CS voice service, which also requires upgrade of the UE. The three types of ICS architecture are defined by the 3PGG 23.292 standard.

In the architecture shown in FIG. 5, an embodiment of the present invention provides a method for providing a voice service in an IMS network. The method includes:
upgrading an MSC-S in a CS core network to a TAS in an IMS network, where the upgraded TAS communicates through a communication interface between the TAS and a CSCF in the IMS network; and
receiving a voice service request from a user, performing, by the TAS, service processing on the voice service request when determining that the voice service is an existing service, and sending the service request to a corresponding application server in the IMS network for processing when determining that the voice service is a new service, where:
   the existing service includes a service that can be processed by an original MSC-S, and the service includes a new service provided by the IMS network. For example, new services include green call, ONLY, and mobile IP Centrex.

In the method, the performing, by the TAS, service processing on the voice service request when determining that the voice service is an existing service includes:
after receiving a service request for an existing service, the TAS performs service processing on the service request according to existing service logic of the original MSC-S.

In the network evolution process, the subscription data of an existing service of the user may be stored in an HLR in the CS network, and the subscription data of a new service of the user may be stored in an HSS in the IMS network. The TAS retains the communication interface to the HLR. After the network evolves to a certain stage, all subscription data of a user is stored in the HSS, and the TAS obtains subscription data of a user from the HSS only.

Through the method for providing a voice service in an IMS network in this embodiment of the present invention, the MSC-S in the CS core network is upgraded to the TAS in the IMS network; the TAS is responsible for service processing for a voice service request sent by an IMS network user or sent by a CS network user through an ICS architecture. In this way, the service processing capabilities of the MSC-S in the CS core network are reused, and it is unnecessary to redevelop the TAS in the IMS network, which protects the operator's investment in a CS service, and reduces development costs and investments; moreover, the TAS reuses the service processing logic of the original MSC-S, and inherits a processing procedure of an existing CS service inherently, which ensures consistency of service experience.

Because the TAS in the IMS network is obtained by upgrading the MSC-S, the interfaces between the original MSC-S and the devices in the CS network (such as HLR and SCP) are retained, the service data of an existing service of the user can be stored in the HLR, the service data of the existing service of the CS user needs no change, and the charging function, the intelligent service, and the CRBT platform interface need no change, which makes the solution highly practicable, reduces the costs of network consolidation, and facilitates the CS network to evolve to the IMS network.

The MSC-S is upgraded to the TAS to provide a service for an IMS user and a CS user uniformly, which accomplishes convergence with the standard-defined ICS architecture and accomplishes seamless convergence with the existing evolution direction.

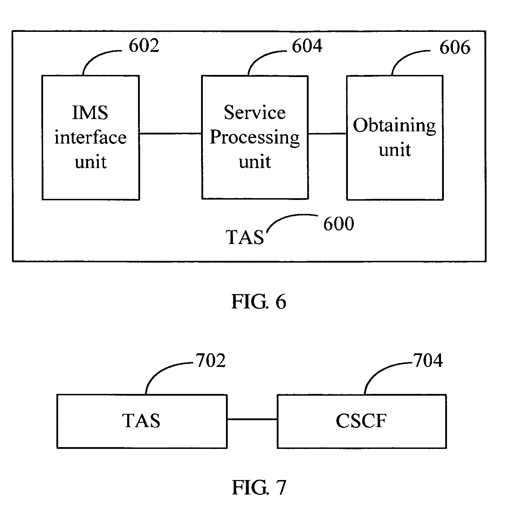

FIG. 6 is a structural diagram of a TAS 600 in an IMS network according to an embodiment of the present invention. The TAS is obtained by upgrading an MSC-S in a CS core network, and includes:
an IMS interface unit 602, configured to exchange information with an other device in the IMS network, for example, receive a user's voice service request from a CSCF; and
a service processing unit 604, configured to: receive a user's voice service request through the IMS interface unit 602; perform processing on the service request when determining that the service request is an existing service; and send the service request to a corresponding application server in the IMS network for processing when determining that the service request is a new service; where
the existing service includes a service that can be processed by an original MSC-S, and the new service includes a new service provided by the IMS network.

The service processing unit 604 processes a service request for an existing service according to the existing service processing logic of the original MSC-S.

The TAS may further include an obtaining unit 606, configured to: obtain service data of an existing service of a user from an HLR in the CS network, and send the obtained service data to the service processing unit 604, and the service processing unit 604 performs processing on the service request according to the received service data.

FIG. 7 is a schematic diagram of an IMS network system for providing a voice service according to an embodiment of the present invention. The system includes a TAS 702 and a CSCF 704 in the IMS network. The TAS 702 is obtained by upgrading an MSC-S in a CS core network and is configured to: exchange information with the CSCF 704 in the IMS network; after receiving a service request from a user, determine whether the service is an existing service or a new service; perform processing on the service request if the service is an existing service, and send the service request to a corresponding application server in the IMS network for processing if the service is a new service; and

The CSCF 704 is configured to: receive a service request from the user, and send the voice service request to the TAS 702 for processing, where the user's service request received by the CSCF 704 include a service request sent by a CS network user through an ICS architecture, and

The existing service includes a service that can be processed by an original MSC-S, and the new service includes a new service provided by the IMS network.

For detailed structure and functions of the TAS 702, refer to the apparatus embodiment shown in FIG. 6.

Further, the system may include an HLR 706 in the CS network. The HLR 706 interacts with the TAS 702, and sends the service data of an existing service of a user to the TAS 702. The TAS 702 is configured to perform processing on the user's service request after obtaining the service data of an existing service from the HLR.

In the system for providing a voice service in the IMS network and the TAS 702 provided in the embodiment of the present invention, the MSC-S in the CS core network is upgraded to the TAS 702 in the IMS network. Because the same technologies are applied, the benefits brought by the system and the TAS are the same as the benefits brought by the method for providing a voice service in the IMS network.

The following describes application scenarios of the foregoing embodiments, assuming that the IMS user is a VoBB user.

Specific application scenario 1: an existing service procedure initiated by a VoBB user (applicable to an EMSC and a TAS which are obtained by upgrading an MSC-S)

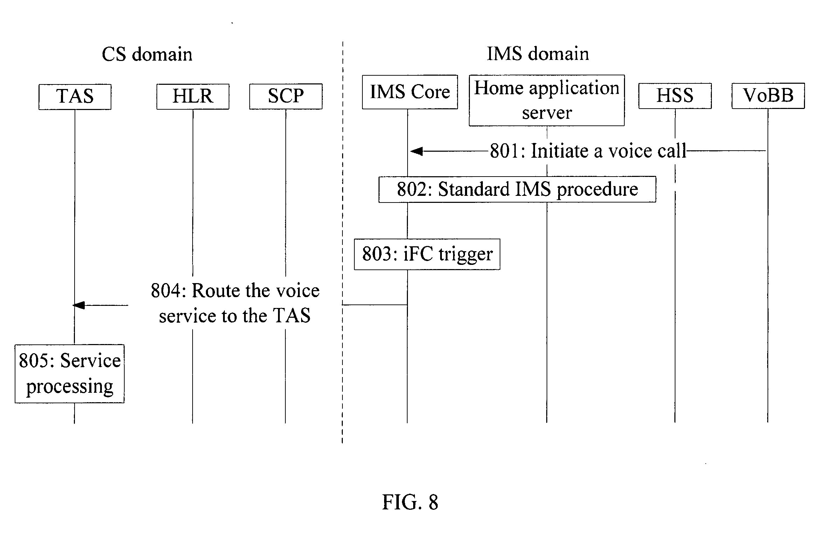

FIG. 8 is a flowchart of a VoBB user initiating an existing service. Assume that the MSC-S is upgraded to the TAS. In FIG. 8, although the TAS is identified in a CS domain, the TAS is already a device of an IMS network after upgrading. FIG. 8 identifies the TAS in the CS domain in order to indicate that the TAS is obtained by upgrading a device in the CS domain. This practice is also applied in the following figures.

The procedure includes the following steps:
Step 801: A VoBB user initiates a voice call request.
Step 802: After receiving the voice call request, an IMS core network performs a standard IMS procedure. For example, after receiving the voice call request, a P-CSCF routes the call request to a selected serving CSCF (S-CSCF). The prerequisites of this scenario are: The VoBB user is already registered to an HSS, and the HSS has already selected an S-CSCF to serve the VoBB user. This part is covered in the prior art, and is not detailed here any further.
Step 803: The IMS core network performs iFC triggering according to the subscription data of the user, and sends the voice service request to the TAS. Specifically, the S-CSCF in the IMS core network determines, according to the subscription data and iFC rules that are downloaded from the HSS at the time of registration, that the service is a voice service, and sends the voice service request to the TAS.
Step 804: The TAS receives the voice service request.
Step 805: The TAS determines that the voice service is an existing service and perform service processing on the service request. Specifically, the TAS performs processing on the service according to the service processing logic of an original MSC-S. For example, the TAS may convert the service request received in a SIP message format into a service request in a format that can be processed by the original MSC-S, and performs service processing on the service according to existing service logic of the original MSC-S.

The service data of the existing service of the VoBB user may be stored in an HLR of the CS network, or an HSS of the IMS network. The TAS may obtain the subscription data of the user from the HSS or HLR in the process of user registration. When the TAS processes a service, if no service data of the user exists in the TAS, the TAS may interact with the HLR or HSS to obtain the service data of the user for service processing.

For an architecture in which the MSC-S is upgraded to an EMSC that possesses the functions of the TAS, the procedure is the same as the foregoing scenario 1, which is not repeatedly described here.

Specific application scenario 2: a new service procedure initiated by a VoBB user (applicable to an EMSC and a TAS which are obtained by upgrading an MSC-S)

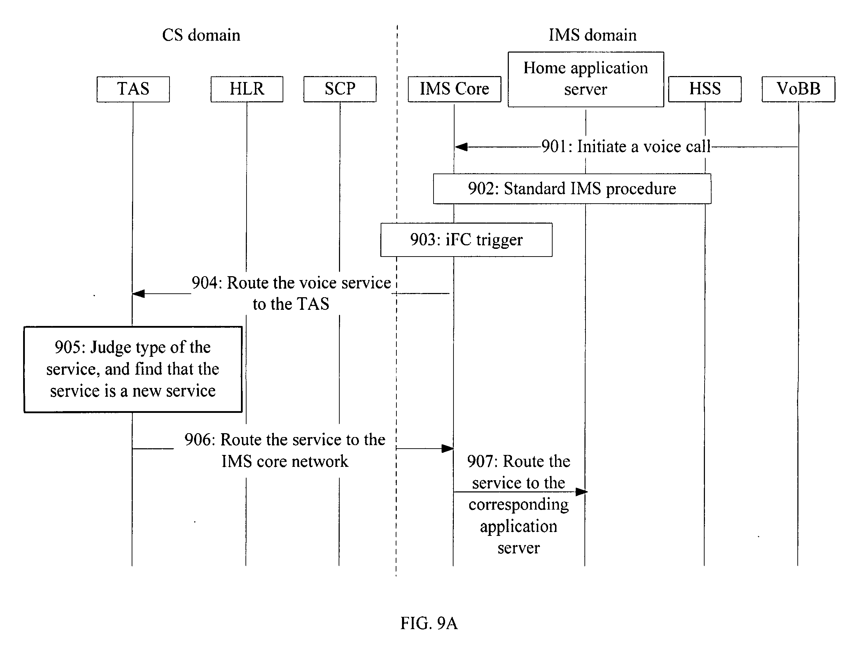

FIG. 9A is a flowchart of a VoBB user initiating a new service. Assuming that the MSC-S is upgraded to a TAS architecture, the procedure includes the following steps:
Steps 901-904 are the same as steps 801-804.
Step 905: The TAS finds, according to the subscription data of the user, that the voice service request is a new service. The TAS may obtain the subscription data of the user from the HSS in a third-party registration process of the user. The third-party registration process is a standard procedure, and is not detailed here.
Step 906: The TAS routes the service request to the IMS core network.
Step 907: The IMS core network routes the service request to a corresponding application server, and the application server performs processing on the new service.

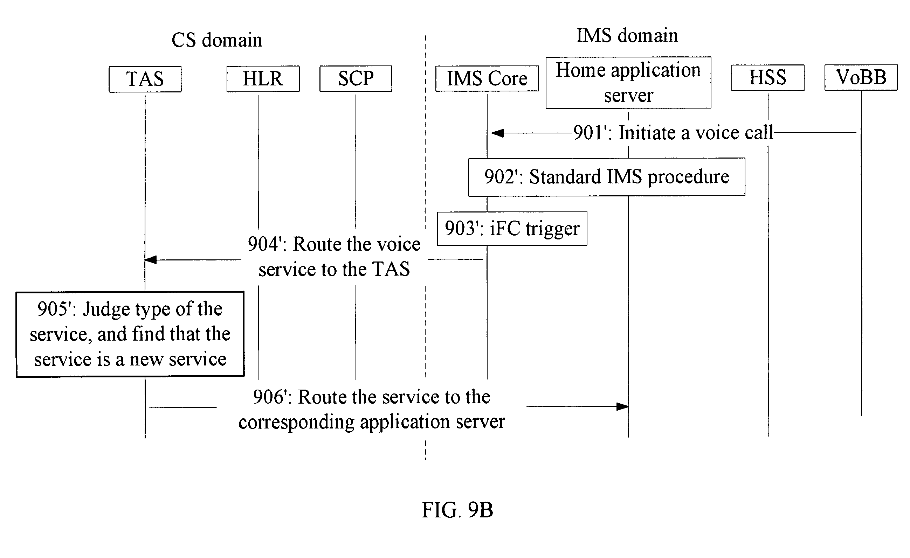

FIG. 9B is an optimized procedure of a VoBB user initiating a new service. Additionally, the TAS further provides certain functions of the CSCF, primarily functions of the S-CSCF. Alternatively, the TAS may be converged with the S-CSCF. In this way, the TAS is capable of direct iFC triggering. Because the TAS possesses some functions of the CSCF, the subscription data of the user is inserted into the TAS in the process of user registration or location update.

The procedure includes the following steps:
Steps 901'-905' are the same as steps 901-905.
Step 906': The TAS directly sends the service request to a corresponding application server for processing.

Through the optimized procedure, the processing efficiency is improved.

Although the VoBB user is taken as an example in the foregoing description, the foregoing procedure is also applicable to a CS user who accesses an IMS network through an ICS architecture. When the CS user sends a service request through the ICS architecture, the procedure of processing the service request is basically similar to the procedure described above, which is not repeatedly described here. The TAS in this scenario serves as a converged voice service server which provides a voice service for an IMS network and a CS network.

Specific application scenario 3: an existing service procedure initiated by a CS user (applicable to an EMSC which is obtained by upgrading an MSC-S)

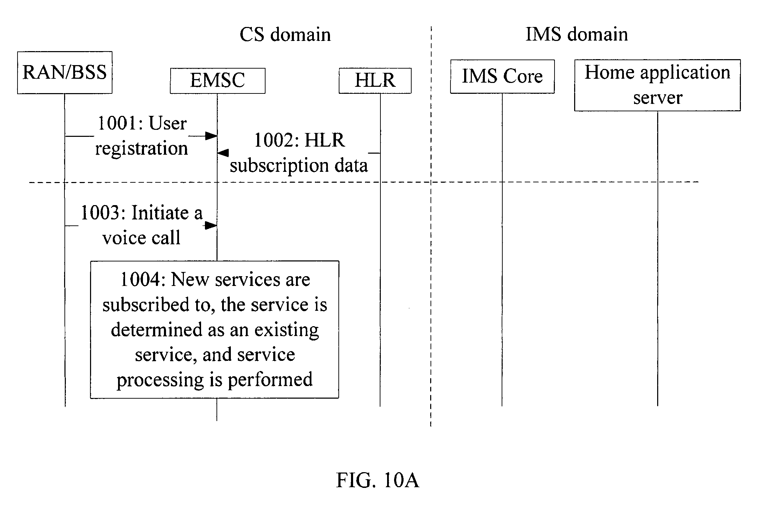

FIG. 10A is a flowchart of a CS user initiating an existing service. An EMSC is obtained by upgrading an original MSC-S. The EMSC possesses functions of a TAS in an IMS network. In this embodiment, the EMSC further provides certain functions of the CSCF, primarily functions of the S-CSCF. Alternatively, the EMSC may be converged with the S-CSCF. In this way, the EMSC is capable of direct iFC triggering. Because the EMSC possesses some functions of the CSCF, subscription data of a new service of the IMS network in the HSS is inserted into the EMSC in the process of user registration or location update.

The procedure includes the following steps:
Step 1001: An RAN/BSS sends a user registration request to the EMSC.
Step 1002: The EMSC interacts with an HLR to obtain the subscription data of the user.
Step 1003: The user initiates a voice call request, and the voice call request is routed to the EMSC through the RAN/BSS.
Step 1004: The EMSC determines that the user has subscribed to a new service. For example, a flag bit in the subscription data indicates that the user has subscribed to a new service. Therefore, the EMSC determines the type of the service according to the user's new service subscription data obtained in the third-party registration process performed by the user in the IMS network. If determining that the current service is the existing service, the EMSC processes the service according to existing service logic of the original MSC-S. In fact, the EMSC performs internal iFC triggering in the foregoing procedure, and processes the service directly after determining the service as a voice service.

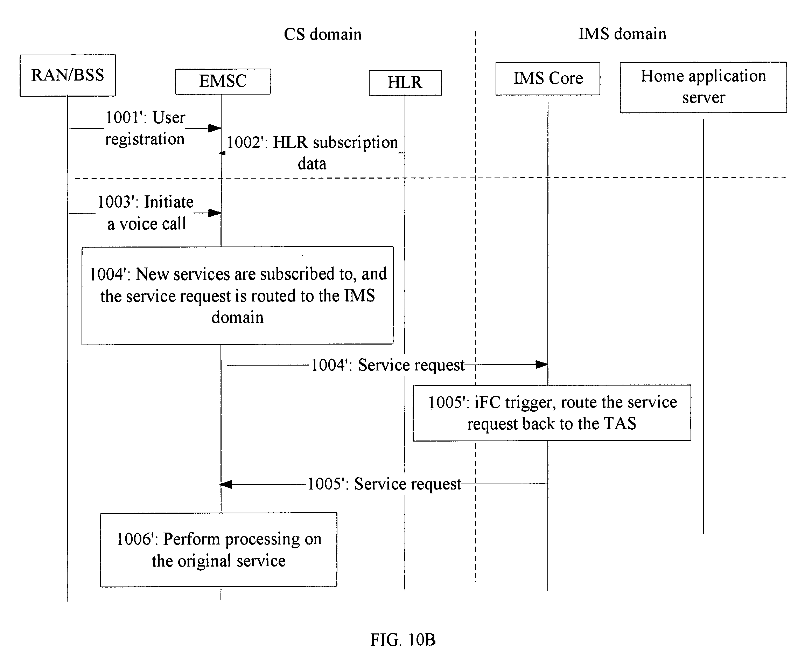

FIG. 10B is another flowchart of a CS user initiating an existing service. In this procedure, the EMSC serves as a TAS solely, and possesses no function of the CSCF.

The procedure includes the following steps:
Steps 1001'-1003' are the same as steps 1001-1003.
Step 1004': The EMSC determines that the user has subscribed to a new service. For example, a flag bit in the subscription data of the user indicates that the user has subscribed to a new service. Therefore, the EMSC routes the service request to an IMS domain. The EMSC may route the service request to the IMS domain through route configuration or by triggering intelligent number change through the SCP. For example, an SSCODE flag is subscribed to in the subscription data of the HLR. If the number matches the SSCODE, the EMSC prefixes the number before sending it to a switch. Alternatively, after the user triggers intelligent number change, the number is changed through the SCP, and the number is re-analyzed and routed to the IMS domain. The service request message sent by the EMSC may be a message format in the CS network, and a Media Gateway Control Function (MGCF) at the border of the IMS network performs conversion between the CS network message format and the SIP message format. Certainly, functions of the MGCF may be set in the EMSC, and the EMSC directly outputs the service request in the SIP message format to the IMS domain.
Step 1005': After receiving the service request, the IMS core network performs iFC triggering according to the subscription data of the user, and routes the service request back to the TAS responsible for processing a voice service (namely, to the EMSC which is equivalent to the TAS in the IMS network).
Step 1006': The EMSC determines that the service is the existing service after receiving the service request, and performs processing on the service request. For example, the EMSC may convert the service request received in a SIP message format into a service request in a format that can be processed by an original MSC-S, and performs processing on the service according to existing service logic of the original MSC-S.

If the service request of the user further includes an other new service, the EMSC sends the service request for the new service to the corresponding application server according to a standard IMS procedure.

Specific application scenario 4: a new service procedure initiated by a CS user (applicable to an EMSC which is obtained by upgrading an MSC-S)

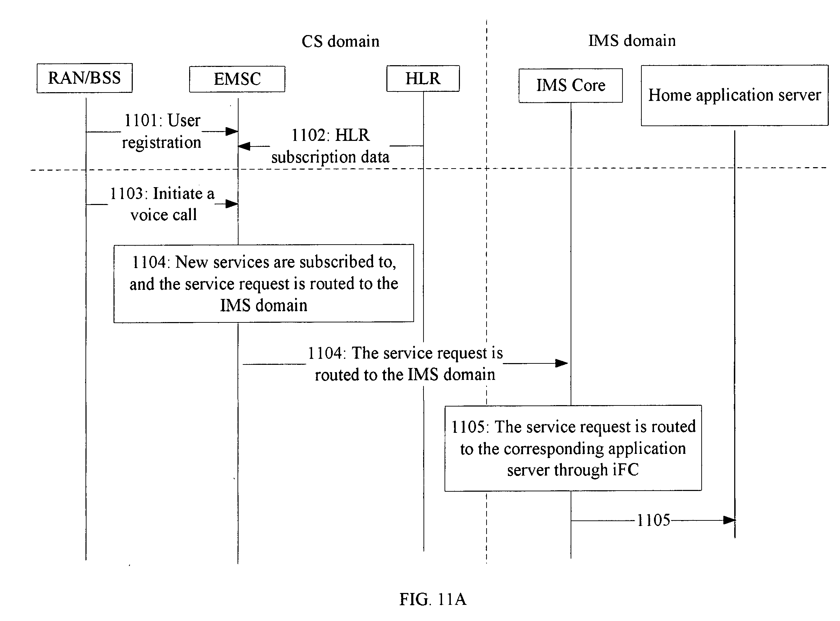

FIG. 11A is a flowchart of a CS user initiating a new service. The procedure includes the following steps:
Steps 1101-1104: The same as steps 1001'-1004'.
Step 1105: The IMS core network performs iFC triggering, and routes the service request to an application server corresponding to the new service for processing.

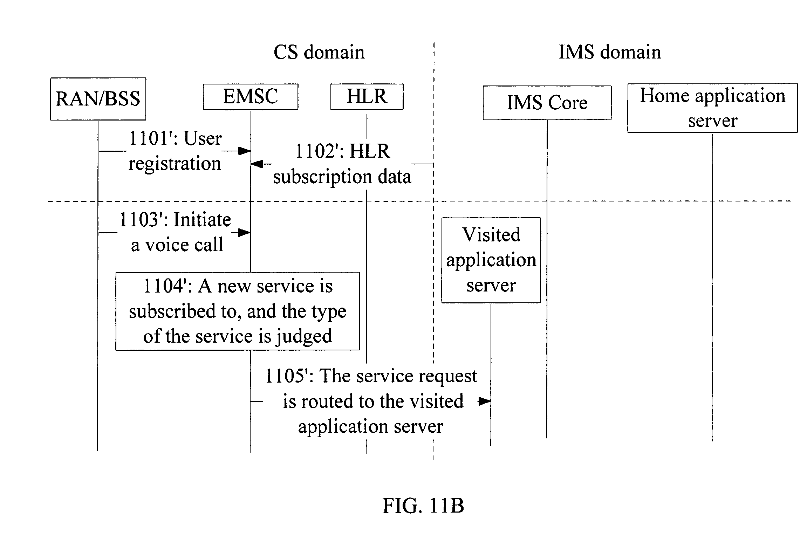

FIG. 11B is another flowchart of a CS user initiating a new service. An EMSC is obtained by upgrading an original MSC-S. The EMSC possesses functions of a TAS in an IMS network. In this embodiment, the EMSC further provides certain functions of a CSCF, primarily functions of an S-CSCF. Alternatively, the EMSC may be converged with the S-CSCF. In this way, the EMSC is capable of direct iFC triggering. Because the EMSC provides some functions of the CSCF, the subscription data of a new service of the IMS network in an HSS is inserted into the EMSC in the process of user registration or location update.

The procedure includes the following steps:
Steps 1101'-1103' are the same as steps 1101-1103.
Step 1104': The EMSC determines that the user has subscribed to a new service, and determines the type of the service request according to the subscription data of the new service. If determining that the type of the service request may be processed by a visited application server, the EMSC directly routes the service request to the visited application server for service processing. Certainly, the service request may be directly routed to the home application server for service processing.

Through the foregoing procedure, the anchoring of the TAS is canceled, and the service processing efficiency is improved.

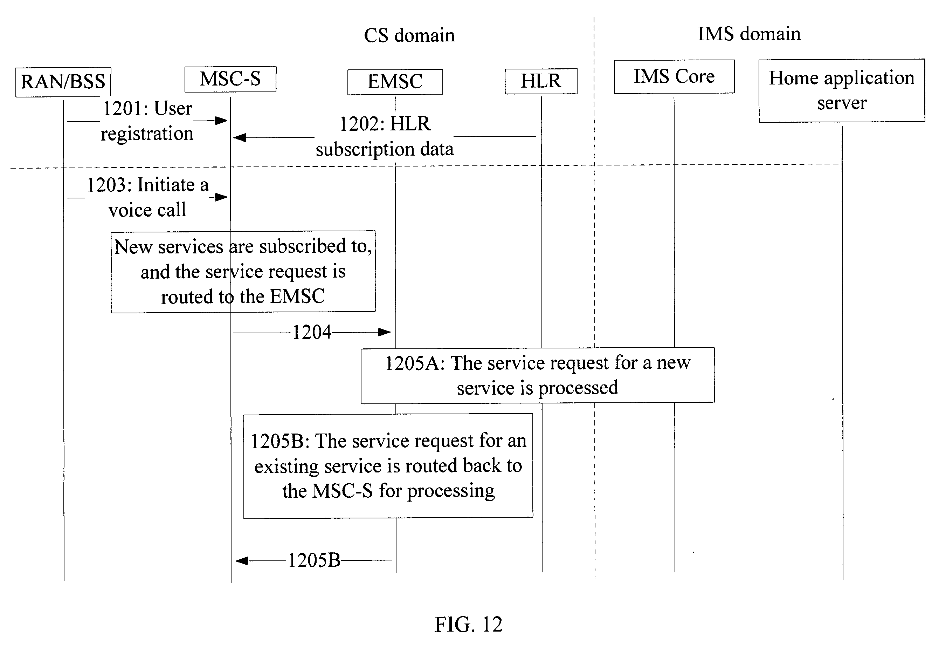

FIG. 12 is another flowchart of a CS user initiating a service. In this scenario, multiple MSC-Ss exist in a network. One MSC-S is upgraded to an EMSC that possesses functions of a TAS in an IMS network, and other MSC-Ss are not upgraded. FIG. 12 illustrates only one MSC-S as an example. The procedure includes the following steps:
Step 1201: An RAN/BSS initiates a user registration request to an MSC-S.
Step 1202: The MSC-S interacts with an HLR to obtain subscription data of the user.
Step 1203: The user initiates a voice call request, and the voice call request is routed to the MSC-S through the RAN/BSS.
Step 1204: The MSC-S determines that the user has subscribed to a new service, and routes the service request to the EMSC. The EMSC serves as an anchor, and uniformly processes a service request sent by a CS user who has subscribed to a new service.
Step 1205A: For the procedure of processing the service request for a new service, refer to the detailed description in the foregoing scenario 4.
Step 1205B: If the service request imitated by the CS user who has subscribed to a new service is a service request for an existing service, after the EMSC determines that the service is the existing service (refer to step 1004 and step 1006' in scenario 3; for previous steps, refer to procedure description in scenario 3), the EMSC needs to route the service request back to the MSC-S that sends the service request, and the MSC-S performs processing on the service.

Through the description of the foregoing embodiments, those skilled in the art may be clearly aware that the embodiments of the present invention may be implemented through hardware, or, preferably in most circumstances, through software in addition to a necessary universal hardware platform. Therefore, the contributions to the prior art made by the technical solution under the present invention may be partially or completely embodied as a software product. The software product may be stored in a storage medium such as a Read Only Memory (ROM), a Random Access Memory (RAM), a magnetic disk, or a Compact Disk-Read Only Memory (CD-ROM), and incorporates several instructions for instructing a computer device (for example, a personal computer, a server, or a network device) to execute the method specified in all or part of the embodiments of the present invention.

In conclusion, the preceding descriptions are merely exemplary embodiments of the present invention, but are not intended to limit the protection scope of the present invention. Any modification, equivalent replacement, or improvement made without departing from the principles of the present invention shall fall within the protection scope of the present invention.

## Claims

1. A method for Circuit Switched, CS, core network evolution, comprising:
connecting, by a Mobile Switching Center Server, MSC-S, Enhanced for IMS Centralized Services, ICS, EMSC, to an IP Multimedia Subsystem, IMS, network, and serving as a Telephony Application Server, TAS, in the IMS network to provide a voice service for a user in the IMS network, wherein the EMSC is obtained by upgrading a Mobile Switching Center Server, MSC-S, in a CS core network, wherein the upgrading comprises enhancing a communication interface between the EMSC and a Call Session Control Function, CSCF, in the IMS network on the basis of an original MSC-S, wherein the EMSC is capable of processing Session Initiation Protocol, SIP, messages and provides service processing logic of the TAS in the IMS network by using existing service processing logic of the MSC-S; and
performing, by the EMSC, service processing on a service request for an existing service, and sending a service request for a new service to a corresponding application server in the IMS network for processing, wherein the service request for the existing service and the service request for the new service are initiated by a CS user who has subscribed to the new service; wherein
the existing service comprises a service that can be processed by the EMSC by using functions of the original MSC-S, and the new service comprises a new service provided by the IMS network.

2. The method for CS core network evolution according to claim 1, wherein:
the using the EMSC as the TAS in the IMS network to provide a voice service for a user in the IMS network comprises:
receiving, by the EMSC, a voice service request of an IMS network user sent by a Call Session Control Function, CSCF, in the IMS network, performing, by the EMSC, service processing on the voice service request when determining that the voice service request is a service request for the existing service, and sending, by the EMSC, the service request to a corresponding application server for processing when determining that the voice service request is a service request for the new service.

3. The method for CS core network evolution according to claim 1, wherein:
the performing, by the EMSC, service processing on the service request for the existing service, wherein the service request for the existing service is initiated by the CS user who has subscribed to the new service, comprises:
after receiving, by the EMSC, the service request initiated by the CS user who has subscribed to the new service, determining that the service request is the service request for the existing service, and performing processing on the service request; or
after receiving, by the EMSC, the service request initiated by the CS user who has subscribed to the new service, determining, according to subscription data of the user, that the user has subscribed to the new service, and routing the service request to a Call Session Control Function, CSCF, in the IMS network; determining, by the CSCF, that the service request is a voice service request, and sending the voice service request to the EMSC that serves as the TAS; determining, by the EMSC, that the voice service request is the service request for the existing service after receiving the voice service request, and performing, by the EMSC, service processing on the service request.

4. The method for CS core network evolution according to claim 1, wherein:
the sending, by the EMSC, the service request for the new service to the corresponding application server in the IMS network for processing, wherein the service request for the new service is initiated by the CS user who has subscribed to the new service, comprises:
after receiving the service request initiated by the CS user who has subscribed to the new service, determining, by the EMSC, that the service request is to the service request for the new service, and directly sending, according to type of the service request for the new service, the service request to the corresponding application server in a visited IMS network for processing; or
after receiving the service request initiated by the CS user who has subscribed to the new service, determining, by the EMSC, according to subscription data of the user, that the user has subscribed to the new service, and routing the service request to a Call Session Control Function, CSCF, in the IMS network; sending, by the CSCF, according to a type of the service request, the service request to the corresponding application server in the IMS network for processing.

5. A network device, wherein:
the network device is obtained by upgrading a Mobile Switching Center Server, MSC-S, in a Circuit-Switched, CS, core network, and is equivalent to a Telephony Application Server, TAS, in an IP Multimedia Subsystem, IMS, network, wherein the network device is a Mobile Switching Center Server Enhanced for IMS Centralized Services, EMSC, wherein the upgrading comprises enhancing a communication interface between the EMSC and a Call Session Control Function, CSCF, in the IMS network on the basis of the original MSC-S, wherein the EMSC is capable of processing Session Initiation Protocol, SIP, messages and provides service processing logic of the TAS in the IMS network by using existing service processing logic of the MSC-S; and
the network device comprises:
an IMS interface unit (302), configured to exchange information with an other device in the IMS network;
a CS interface unit (304), configured to exchange information with a device in a CS network; and
a service processing unit (306), configured to: provide a voice service for a user in the IMS network after the IMS interface unit or the CS interface unit receives a service request from the user; perform service processing on the service request for an existing service; and send the service request for a new service to a corresponding application server in the IMS network for processing, wherein the service request for the existing service and the service request for the new service are initiated by a CS user who has subscribed to the new service; wherein
the existing service comprises a service that can be processed by the EMSC by using functions of the original MSC-S, and the new service comprises a new service provided by the IMS network.

6. The network device according to claim 5, wherein:
the providing, by the service processing unit, the voice service for the user in the IMS network comprises: receiving a voice service request from the IMS network user sent by the IMS interface unit; when determining that the voice service request is the service request for the existing service, performing, by the service processing unit, service processing on the service request; and when determining that the voice service request is the service request for the new service, sending, by the service processing unit, the service request to the corresponding application server for service processing;
the performing, by the service processing unit, processing on the service request for the existing service, wherein the service request for the existing service is initiated by the CS user who has subscribed to the new service, comprises: after receiving the service request initiated by the CS user who has subscribed to the new service through the CS interface unit, determining, by the service processing unit, that the service request is the service request for the existing service, and performing processing on the service request; or, determining, according to subscription data of the user, that the user has subscribed to the new service, and routing the service request to a Call Session Control Function, CSCF, in the IMS network, determining, by the CSCF, the service request is a voice service request and sending the voice service request to the service processing unit through the IMS interface unit; after receiving the voice service request, determining, by the service processing unit, that the voice service request is the service request for the existing service, and performing service processing on the service request;
the sending, by the service processing unit, the service request for the new service initiated by the CS user who has subscribed to the new service to the corresponding application server of the IMS network for processing comprises: after receiving the service request initiated by the CS user who has subscribed to the new service through the CS interface unit, determining, by the service processing unit, that the service request is to the service request for the new service, and directly sending, according to type of the service request for the new service, the service request to the corresponding application server in a visited IMS network for processing; or
after receiving the service request initiated by the CS user who has subscribed to the new service through the CS interface unit, determining, by the service processing unit, according to the subscription data of the user, that the user has subscribed to the new service, and routing the service request to a CSCF in the IMS network, sending, by the CSCF, according to the type of the service request, the service request to the corresponding application server in the IMS network for processing, and if the service request is a voice service request, sending, by the CSCF, the voice service request to the service processing unit through the IMS interface unit; determining, by the service processing unit, that the voice service is the new service, and sending the service request to the corresponding application server for processing.

7. The network device according to claim 5, wherein the performing, by the service processing unit, processing on the existing service initiated by the user, comprises:
performing, by the service processing unit, processing on the existing service according to existing service processing logic of the original MSC-S.

8. The network device according to claim 5, wherein:
the network device further comprises an obtaining unit (606), configured to: obtain service data of an existing service of a user from a Home Location Register, HLR, in the CS network, and send the obtained service data to the service processing unit, and the service processing unit performs processing on the service request according to the received service data.

9. A system for Circuit Switched, CS, core network evolution, comprising:
a Mobile Switching Center Server, MSC-S, Enhanced for IMS Centralized Services, ICS" EMSC (402), wherein the EMSC is obtained by upgrading a Mobile Switching Center Server, MSC-S, in a CS core network and possesses functions of a Telephony Application Server, TAS, in the IMS network, wherein the upgrading comprises enhancing a communication interface between the EMSC and a Call Session Control Function, CSCF, in the IMS network on the basis of the original MSC-S, wherein the EMSC is capable of processing Session Initiation Protocol, SIP, messages and provides service processing logic of the TAS in the IMS network by using existing service processing logic of the MSC-S, and the system further comprises a Call Session Control Function, CSCF(404), of an IP Multimedia Subsystem, IMS, network;
the CSCF (404) in the IMS network is configured to send a received voice service request from a user in the IMS network to the EMSC (402); and
the EMSC (402) is configured to connect to the IMS network and serves as the TAS in the IMS network to provide a voice service for the user in the IMS network; the EMSC is further configured to: receive a service request sent by a CS user, perform service processing on the service request for an existing service, and send the service request for a new service to a corresponding application server in the IMS network for processing, wherein the service request for the existing service and the service request for the new service are initiated by the CS user who has subscribed to the new service; wherein
the existing service comprises a service that can be processed by the EMSC by using functions of the original MSC-S, and the new service comprises a new service provided by the IMS network.

10. The system for CS core network evolution according to claim 9, wherein:
the system further comprises one or more MSC-Ss which are not upgraded in the CS core network, wherein the one or more MSC-Ss are configured to send the received service request initiated by the CS user who has subscribed to the new service to the EMSC; and
after receiving the service request, the EMSC sends the service request for the new service to the corresponding application server in the IMS network for processing, and sends the service request for the existing service back to the MSC-S, and the MSC-S performs processing on the service request.

11. The system for CS core network evolution according to claim 9, wherein:
the EMSC is a network device specified in any one of claims 6-8.

## Patentansprüche

1. Verfahren für die Circuit Switched Core Network Evolution (CS Core Network Evolution), das Folgendes umfasst:
Verbinden, durch einen Mobile Switching Center Server, MSC-S, Enhanced for IMS Centralized Services, ICS, EMSC, mit einem IP Multimedia Subsystem-Netzwerk, IMS-Netzwerk, und als Telephony Application Server , TAS, in dem IMS-Netzwerk dienend, um einen Sprachdienst für einen Benutzer in dem IMS-Netzwerk bereitzustellen, wobei das EMSC erhalten wird durch Aufrüsten eines Mobile Switching Center Server (MSC-S), in einem SC Core Network, wobei das Aufrüsten Verbessern einer Kommunikationsschnittstelle zwischen dem EMSC und einer Call Session Control Function, CSCF, in dem IMS-Netzwerk auf der Basis eines ursprünglichen MSC-S umfasst, wobei das EMSC Session Initiation Protocol-Nachrichten, SIP-Nachrichten, verarbeiten kann und eine Dienstverarbeitungslogik des TAS in dem IMS-Netzwerk durch Verwenden einer existierenden Dienstverarbeitungslogik des MSC-S bereitstellt; und
Durchführen, durch das EMSC, einer Dienstverarbeitung an einer Dienstanforderung für einen existierenden Dienst und Senden einer Dienstanforderung für einen neuen Dienst an einen entsprechenden Applikationsserver in dem IMS-Netzwerk zum Verarbeiten, wobei die Dienstanforderung für den existierenden Dienst und die Dienstanforderung für den neuen Dienst durch einen CS-Benutzer initiiert werden, der an dem neuen Dienst teilnimmt; wobei
der existierende Dienst einen Dienst umfasst, der durch das EMSC durch Verwenden von Funktionen des ursprünglichen MSC-S verarbeitet werden kann und der neue Dienst einen durch das IMS-Netzwerk bereitgestellten neuen Dienst umfasst.

2. Verfahren für die CS Core Network Evolution nach Anspruch 1, wobei:
das Verwenden des EMSC als der TAS in dem IMS-Netzwerk einen Sprachdienst für einen Benutzer in dem IMS-Netzwerk Folgendes umfasst:
Empfangen, durch das EMSC, einer Sprachdienstanforderung eines IMS-Netzwerkbenutzers, die von einer Call Session Control Function, CSCF, in dem IMS-Netzwerk gesendet wurde, Durchführen, durch das EMSC, einer Dienstverarbeitung an der Sprachdienstanforderung beim Bestimmen, dass die Sprachdienstanforderung eine Dienstanforderung für den existierenden Dienst ist, und Senden, durch das EMSC, der Dienstanforderung an einen entsprechenden Applikationsserver zur Verarbeitung beim Bestimmen, dass die Sprachdienstanforderung eine Dienstanforderung für den neuen Dienst ist.

3. Verfahren für CS Core Network Evolution nach Anspruch 1, wobei:
das Durchführen, durch das EMSC, einer Dienstverarbeitung an der Dienstanforderung für den existierenden Dienst, wobei die Dienstanforderung für den existierenden Dienst durch den CS-Benutzer initiiert wird, der an dem neuen Dienst teilnimmt, Folgendes umfasst:
nach dem Empfangen, durch das EMSC, der durch den CS-Benutzer, der an dem neuen Dienst teilnimmt, initiierten Dienstanforderung, Bestimmen, dass die Dienstanforderung die Dienstanforderung für den existierenden Dienst ist und Durchführen einer Verarbeitung an der Dienstanforderung, oder
nach dem Empfangen, durch das EMSC, der durch den CS-Benutzer, der an dem neuen Dienst teilnimmt, initiierten Dienstanforderung, Bestimmen gemäß Teilnahmedaten des Benutzers, dass der Benutzer an dem neuen Dienst teilnimmt und Lenken der Dienstanforderung an eine Call Session Control Function, CSCF, in dem IMS-Netzwerk; Bestimmen, durch die CSCF, dass die Dienstanforderung eine Sprachdienstanforderung ist, und Senden der Sprachdienstanforderung an das EMSC, das als der TAS dient; Bestimmen, durch das EMSC, dass die Sprachdienstanforderung die Dienstanforderung für den existierenden Dienst ist, nach Empfangen der Sprachdienstanforderung, und Durchführen, durch das EMSC, einer Dienstverarbeitung an der Dienstanforderung.

4. Verfahren für CS Core Network Evolution nach Anspruch 1, wobei:
das Senden, durch das EMSC, der Dienstanforderung für den neuen Dienst an den entsprechenden Applikationsserver in dem IMS-Netzwerk zur Verarbeitung, wobei die Dienstanforderung für den neuen Dienst durch den CS-Benutzer initiiert wird, der an dem neuen Dienst teilnimmt, Folgendes umfasst:
nach dem Empfangen der durch den CS-Benutzer, der an dem neuen Dienst teilnimmt, initiierten Dienstanforderung, Bestimmen, durch das EMSC, dass die Dienstanforderung die Dienstanforderung für den neuen Dienst betrifft, und direktes Senden, entsprechend der Art der Dienstanforderung für den neuen Dienst, der Dienstanforderung an den entsprechenden Applikationsserver in einem besuchten IMS-Netzwerk zur Verarbeitung; oder
nach dem Empfangen der durch den CS-Benutzer, der an dem neuen Dienst teilnimmt, initiierten Dienstanforderung, Bestimmen, durch das EMSC, gemäß Teilnahmedaten des Benutzers, dass der Benutzer an dem neuen Dienst teilnimmt, und Lenken der Dienstanforderung an eine Call Session Control Function, CSCF, in dem IMS-Netzwerk; Senden, durch das CSCF, gemäß einer Art der Dienstanforderung, der Dienstanforderung an den entsprechenden Applikationsserver in dem IMS-Netzwerk zur Verarbeitung.

5. Netzwerkeinrichtung, wobei:
die Netzwerkeinrichtung erhalten wird durch Aufrüsten eines Mobile Switching Center Server, MSC-S, in einem Circuit Switched Core Network, CS Core Network, und äquivalent einem Telephony Application Server, TAS, in einem IP Multimedia Subsystem Network, IMS-Netzwerk, ist, wobei die Netzwerkeinrichtung ein Mobile Switching Center Server Enhanced for IMS Centralized Services, EMSC, ist, wobei das Aufrüsten das Verbessern einer Kommunikationsschnittstelle zwischen dem EMSC und einer Call Session Control Function, CSCF, in dem IMS-Netzwerk auf der Basis des ursprünglichen MSC-S ist, wobei das EMSC Session Initiation Protocol-Nachrichten, SIP-Nachrichten, verarbeiten kann und Dienstverarbeitungslogik des TAS in dem IMS-Netzwerk durch Verwenden einer existierenden Dienstverarbeitungslogik des MSC-S bereitstellt; und
die Netzwerkeinrichtung Folgendes umfasst:
eine IMS-Schnittstelleneinheit (302), konfiguriert zum Austauschen von Informationen mit einer anderen Einrichtung in dem IMS-Netzwerk;
eine CS-Schnittstelleneinheit (304), konfiguriert zum Austauschen von Informationen mit einer Einrichtung in einem CS-Netzwerk; und
eine Dienstverarbeitungseinheit (306), konfiguriert zum: Bereitstellen eines Sprachdienstes für einen Benutzer in dem IMS-Netzwerk, nachdem die IMS-Schnittstelleneinheit oder die CS-Schnittstelleneinheit eine Dienstanforderung von dem Benutzer empfängt; Durchführen einer Dienstverarbeitung an der Dienstanforderung für einen existierenden Dienst; und
Senden der Dienstanforderung für einen neuen Dienst an einen entsprechenden Applikationsserver in dem IMS-Netzwerk zur Verarbeitung, wobei die Dienstanforderung für den existierenden Dienst und die Dienstanforderung für den neuen Dienst durch einen CS-Benutzer, der an dem neuen Dienst teilnimmt, initiiert werden; wobei
der existierende Dienst einen Dienst umfasst, der durch das EMSC unter Verwendung von Funktionen des ursprünglichen MSC-S verarbeitet werden kann und der neue Dienst einen durch das IMS-Netzwerk bereitgestellten neuen Dienst umfasst.

6. Netzwerkeinrichtung nach Anspruch 5, wobei:
das Bereitstellen, durch die Dienstverarbeitungseinheit, des Sprachdienstes für den Benutzer in dem IMS-Netzwerk Folgendes umfasst: Empfangen einer durch die IMS-Schnittstelleneinheit gesendeten Sprachdienstanforderung von dem IMS-Netzwerkbenutzer; beim Bestimmen, dass die Sprachdienstanforderung die Dienstanforderung für den existierenden Dienst ist, Durchführen, durch die Dienstverarbeitungseinheit, einer Dienstverarbeitung an der Dienstanforderung, und beim Bestimmen, dass die Sprachdienstanforderung die Dienstanforderung für den neuen Dienst ist, Senden, durch die Dienstverarbeitungseinheit, der Dienstanforderung an den entsprechenden Applikationsserver für die Dienstverarbeitung;
das Durchführen, durch die Dienstverarbeitungseinheit, der Verarbeitung an der Dienstanforderung für den existierenden Dienst, wobei die Dienstanforderung für den existierenden Dienst durch den CS-Benutzer, der an dem neuen Dienst teilnimmt, initiiert wird, Folgendes umfasst:
nach dem Empfangen der durch den CS-Benutzer, der an dem neuen Dienst teilnimmt, initiierten Dienstanforderung durch die CS-Schnittstelleneinheit, Bestimmen, durch die Dienstverarbeitungseinheit, dass die Dienstanforderung die Dienstanforderung für den existierenden Dienst ist, und Durchführen einer Verarbeitung an der Dienstanforderung; oder Bestimmen, gemäß Teilnehmerdaten des Benutzers, dass der Benutzer an dem neuen Dienst teilnimmt, und Lenken der Dienstanforderung an eine Call Session Control Function, CSCF, in dem IMS-Netzwerk, Bestimmen, durch die CSCF, dass die Dienstanforderung eine Sprachdienstanforderung ist, und Senden der Sprachdienstanforderung an die Dienstverarbeitungseinheit durch die IMS-Schnittstelleneinheit; nach dem Empfangen der Sprachdienstanforderung, Bestimmen, durch die Dienstvearbeitungseinheit, dass die Sprachdienstanforderung die Dienstanforderung für den existierenden Dienst ist, und Durchführen einer Dienstverarbeitung an der Dienstanforderung,
das Senden, durch die Dienstverarbeitungseinheit, der Dienstanforderung für den durch den CS-Benutzer, der an dem neuen Dienst teilnimmt, initiierten neuen Dienst an den entsprechenden Applikationsserver des IMS-Netzwerks zum Verarbeiten Folgendes umfasst: nach dem Empfangen der durch den CS-Benutzer, der an dem neuen Dienst teilnimmt, initiierten Dienstanforderung durch die CS-Schnittstelleneinheit, Bestimmen, durch die Dienstverarbeitungseinheit, dass die Dienstanforderung die Dienstanforderung für den neuen Dienst betrifft, und direktes Senden, gemäß der Art der Dienstanforderung für den neuen Dienst, der Dienstanforderung an den entsprechenden Applikationsserver in einem besuchten IMS-Netzwerk zur Verarbeitung; oder
nach dem Empfangen der durch den CS-Benutzer, der an dem neuen Dienst teilnimmt, initiierten Dienstanforderung durch die CS-Schnittstelleneinheit, Bestimmen, durch die Dienstverarbeitungseinheit, gemäß den Teilnehmerdaten des Benutzers, dass der Benutzer an dem neuen Dienst teilnimmt, und Lenken der Dienstanforderung an eine CSCF in dem IMS-Netzwerk, Senden, durch die CSCF, gemäß der Art der Dienstanforderung, der Dienstanforderung an den entsprechenden Applikationsserver in dem IMS-Netzwerk zur Verarbeitung, und falls die Dienstanforderung eine Sprachdienstanforderung ist, Senden, durch die CSCF, der Sprachdienstanforderung an die Dienstverarbeitungseinheit durch die IMS-Schnittstelleneinheit; Bestimmen, durch die Dienstverarbeitungseinheit, dass der Sprachdienst der neue Dienst ist, und Senden der Dienstanforderung an den entsprechenden Applikationsserver zur Verarbeitung.

7. Netzwerkeinrichtung nach Anspruch 5, wobei das Durchführen, durch die Dienstverarbeitungseinheit, einer Verarbeitung an dem durch den Benutzer initiierten existierenden Dienst Folgendes umfasst:
Durchführen, durch die Dienstverarbeitungseinheit, einer Verarbeitung an dem existierenden Dienst gemäß einer existierenden Dienstverarbeitungslogik des ursprünglichen MSC-S.

8. Netzwerkeinrichtung nach Anspruch 5, wobei:
die Netzwerkeinrichtung weiterhin eine Erhaltungseinheit (606) umfasst, die konfiguriert ist zum: Erhalten von Dienstdaten eines existierenden Dienstes eines Benutzers von einem Home Location Register, HLR, in dem CS-Netzwerk und Senden der erhaltenen Dienstdaten an die Dienstverarbeitungseinheit, und die Dienstverarbeitungseinheit eine Verarbeitung an der Dienstanforderung gemäß den empfangenen Dienstdaten durchführt.

9. System für Circuit Switched Core Network Evolution, CS Core Network Evolution, das Folgendes umfasst:
einen Mobile Switching Center Server, MSC-S, Enhanced for IMS Centralized Services, ICS, EMSC (402), wobei das EMSC erhalten wird durch Aufrüsten eines Mobile Switching Center Server, MSC-S, in einem CS Core Network und Funktionen eines Telephony Application Server, TAS, in dem IMS-Netzwerk besitzt, wobei das Aufrüsten das Verbessern einer Kommunikationsschnittstelle zwischen dem EMSC und einer Call Session Control Function, CSCF, in dem IMS-Netzwerk auf der Basis eines ursprünglichen MSC-S umfasst, wobei das EMSC Session Initiation Protocol-Nachrichten, SIP-Nachrichten, verarbeiten kann und Dienstverarbeitungslogik des TAS in dem IMS-Netzwerk durch Verwenden einer existierenden Dienstverarbeitungslogik des MSC-S bereitstellt und das System weiterhin eine Call Session Control Function, CSCF (404), eines IP Multimedia Subsystem-Netzwerks, IMS-Netzwerks, umfasst;
die CSCF (404) in dem IMS-Netzwerk konfiguriert ist zum Senden einer empfangenen Sprachdienstanforderung von einem Benutzer in dem IMS-Netzwerk an das EMSC (402); und
das EMSC (402) konfiguriert ist zum Verbinden mit dem IMS-Netzwerk und als der TAS in dem IMS-Netzwerk dient zum Bereitstellen eines Sprachdienstes für den Benutzer in dem IMS-Netzwerk; das EMSC weiterhin konfiguriert ist zum:
Empfangen einer durch einen CS-Benutzer gesendeten Dienstanforderung, Durchführen einer Dienstverarbeitung an der Dienstanforderung für einen existierenden Dienst und Senden der Dienstanforderung für einen neuen Dienst an einen entsprechenden Applikationsserver in dem IMS-Netzwerk zum Verarbeiten, wobei die Dienstanforderung für den existierenden Dienst und die Dienstanforderung für den neuen Dienst durch den CS-Benutzer, der an dem neuen Dienst teilnimmt, initiiert werden; wobei
der existierende Dienst einen Dienst umfasst, der durch das EMSC unter Verwendung von Funktionen des ursprünglichen MSC-S verarbeitet werden kann und der neue Dienst einen durch das IMS-Netzwerk bereitgestellten neuen Dienst umfasst.

10. System für CS Core Network Evolution nach Anspruch 9, wobei:
das System weiterhin einen oder mehrere MSC-Ss umfasst, die nicht in dem CS Core Network aufgerüstet sind, wobei der eine oder die mehreren MSC-Ss konfiguriert sind zum Senden der durch den CS-Benutzer, der an dem neuen Dienst teilnimmt, initiierten Dienstanforderung an das EMSC; und
nach dem Empfangen der Dienstanforderung das EMSC die Dienstanforderung für den neuen Dienst an den entsprechenden Applikationsserver in dem IMS-Netzwerk zur Verarbeitung sendet und die Dienstanforderung für den existierenden Dienst zurück zu dem MSC-S sendet und der MSC-S eine Verarbeitung an der Dienstanforderung durchführt.

11. System für CS Core Network Evolution nach Anspruch 9, wobei das EMSC eine in einem der Ansprüche 6-8 spezifizierte Netzwerkeinrichtung ist.

## Revendications

1. Procédé d'évolution de réseau coeur Commuté par Circuits, CS, comprenant :
la connexion, par un Serveur de Centre de Commutation de Services Mobiles, MSC-C, Rehaussé pour des Services Centralisés IMS, ICS, soit EMSC, à un réseau à Sous-système Multimédia IP, IMS, et servant de Serveur d'Application de Téléphonie, TAS, dans le réseau IMS pour fournir un service vocal à un utilisateur dans le réseau IMS, dans lequel l'EMSC est obtenu en mettant à niveau un Serveur de Centre de Commutation de Services Mobiles, MSC-S, dans un réseau coeur CS, dans lequel la mise à niveau comprend le rehaussement d'une interface de communication entre l'EMSC et une Fonction de Commande de Session d'Appel, CSCF, dans le réseau IMS en fonction d'un MSC-S d'origine, dans lequel l'EMSC est capable de traiter des messages de Protocole de Lancement de Session, SIP, et fournit une logique de traitement de service du TAS dans le réseau IMS en utilisant une logique de traitement de service existante du MSC-S ; et
l'exécution, par l'EMSC, d'un traitement de service sur une requête de service pour un service existant, et l'envoi d'une requête de service pour un nouveau service à un serveur d'application correspondant dans le réseau IMS en vue de son traitement, dans lequel la requête de service pour le service existant et la requête de service pour le nouveau service sont lancées par un utilisateur CS qui a souscrit au nouveau service ; dans lequel
le service existant comprend un service qui peut être traité par l'EMSC en utilisant des fonctions du MSC-S d'origine, et le nouveau service comprend un nouveau service fourni par le réseau IMS.

2. Procédé d'évolution de réseau coeur CS selon la revendication 1, dans lequel :
l'utilisation de l'EMSC comme TAS dans le réseau IMS pour fournir un service vocal à un utilisateur dans le réseau IMS comprend :
la réception, par l'EMSC, d'une requête de service vocal d'un utilisateur de réseau IMS envoyée par une Fonction de Commande de Session d'Appel, CSCF, dans le réseau IMS, l'exécution, par l'EMSC, d'un traitement de service sur la requête de service vocal quand il est déterminé que la requête de service vocal est une requête de service pour le service existant, et l'envoi, par l'EMSC, de la requête de service à un serveur d'application correspondant en vue de son traitement quand il est déterminé que la requête de service vocal est une requête de service pour le nouveau service.

3. Procédé d'évolution de réseau coeur CS selon la revendication 1, dans lequel :
l'exécution, par l'EMSC, d'un traitement de service sur la requête de service pour le service existant, dans lequel la requête de service pour le service existant est lancée par l'utilisateur CS qui a souscrit au nouveau service, comprend :
après la réception, par l'EMSC, de la requête de service lancée par l'utilisateur CS qui a souscrit au nouveau service, la détermination que la requête de service est la requête de service pour le service existant, et l'exécution du traitement sur la requête de service ; ou
après la réception, par l'EMSC, de la requête de service lancée par l'utilisateur CS qui a souscrit au nouveau service, la détermination, en fonction des données de souscription de l'utilisateur, que l'utilisateur a souscrit au nouveau service, et le routage de la requête de service à une Fonction de Commande de Session d'Appel, CSCF, dans le réseau IMS ; la détermination, par la CSCF, que la requête de service est une requête de service vocal, et l'envoi de la requête de service vocal à l'EMSC qui sert de TAS ; la détermination, par l'EMSC, que la requête de service vocal est la requête de service pour le service existant après la réception de la requête de service vocal, et l'exécution, par l'EMSC, du traitement de service sur la requête de service.

4. Procédé d'évolution de réseau coeur CS selon la revendication 1, dans lequel :
l'envoi, par l'EMSC, de la requête de service pour le nouveau service au serveur d'application correspondant dans le réseau IMS en vue de son traitement, dans lequel la requête de service pour le nouveau service est lancée par l'utilisateur CS qui a souscrit au nouveau service, comprend :
après la réception de la requête de service lancée par l'utilisateur CS qui a souscrit au nouveau service, la détermination, par l'EMSC, que la requête de service est la requête de service pour le nouveau service, et l'envoi direct, en fonction du type de requête de service pour le nouveau service, de la requête de service au serveur d'application correspondant dans un réseau IMS visité en vue de son traitement ; ou
après la réception de la requête de service lancée par l'utilisateur CS qui a souscrit au nouveau service, la détermination, par l'EMSC, en fonction des données de souscription de l'utilisateur, que l'utilisateur a souscrit au nouveau service, et le routage de la requête de service à une Fonction de Commande de Session d'Appel, CSCF, dans le réseau IMS ; l'envoi, par la CSCF, en fonction d'un type de la requête de service, de la requête de service au serveur d'application correspondant dans le réseau IMS en vue de son traitement.

5. Dispositif de réseau, dans lequel :
le dispositif de réseau est obtenu en mettant à niveau un Serveur de Centre de Commutation de Services Mobiles, MSC-S, dans un réseau coeur Commuté par Circuits, CS, et est équivalent à un Serveur d'Application de Téléphonie, TAS, dans un réseau à Sous-système Multimédia IP, IMS, dans lequel le dispositif de réseau est un Serveur de Centre de Commutation de Services Mobiles Rehaussé de Services Centralisés IMS, EMSC, dans lequel la mise à niveau comprend le rehaussement d'une interface de communication entre l'EMSC et une Fonction de Commande de Session d'Appel, CSCF, dans le réseau IMS en fonction du MSC-S d'origine, dans lequel l'EMSC est capable de traiter des messages de Protocole de Lancement de Session, SIP, et fournit une logique de traitement de service du TAS dans le réseau IMS en utilisant une logique de traitement de service existante du MSC-S ; et
le dispositif de réseau comprend :
une unité d'interface IMS (302), configurée pour échanger des informations avec un autre dispositif dans le réseau IMS ;
une unité d'interface CS (304), configurée pour échanger des informations avec un dispositif dans un réseau CS ; et
une unité de traitement de service (306), configurée pour : fournir un service vocal à un utilisateur dans le réseau IMS après que l'unité d'interface IMS ou l'unité d'interface CS a reçu une requête de service de l'utilisateur ; exécuter un traitement de service sur la requête de service pour un service existant ; et envoyer la requête de service pour un nouveau service à un serveur d'application correspondant dans le réseau IMS en vue de son traitement, dans lequel la requête de service pour le service existant et la requête de service pour le nouveau service sont lancées par un utilisateur CS qui a souscrit au nouveau service ; dans lequel le service existant comprend un service qui peut être traité par l'EMSC en utilisant des fonctions du MSC-S d'origine, et le nouveau service comprend un nouveau service fourni par le réseau IMS.

6. Dispositif de réseau selon la revendication 5, dans lequel :
la fourniture, par l'unité de traitement de service, du service vocal à l'utilisateur dans le réseau IMS comprend : la réception d'une requête de service vocal depuis l'utilisateur de réseau IMS envoyée par l'unité d'interface IMS ; quand il est déterminé que la requête de service vocal est la requête de service pour le service existant, l'exécution, par l'unité de traitement de service, d'un traitement de service sur la requête de service ; et quand il est déterminé que la requête de service vocal est la requête de service pour le nouveau service, l'envoi, par l'unité de traitement de service, de la requête de service au serveur d'application correspondant pour le traitement de service ;
l'exécution, par l'unité de traitement de service, d'un traitement sur la requête de service pour le service existant, dans lequel la requête de service pour le service existant est lancée par l'utilisateur CS qui a souscrit au nouveau service, comprend :
après la réception de la requête de service lancée par l'utilisateur CS qui a souscrit au nouveau service par le biais de l'unité d'interface CS, la détermination, par l'unité de traitement de service, que la requête de service est la requête de service pour le service existant, et l'exécution du traitement sur la requête de service ; ou, la détermination, en fonction des données de souscription de l'utilisateur, que l'utilisateur a souscrit au nouveau service, et le routage de la requête de service à une Fonction de Commande de Session d'Appel, CSCF, dans le réseau IMS, la détermination, par la CSCF, que la requête de service est une requête de service vocal et l'envoi de la requête de service vocal à l'unité de traitement de service par le biais de l'unité d'interface IMS ; après la réception de la requête de service vocal, la détermination, par l'unité de traitement de service, que la requête de service vocal est la requête de service pour le service existant, et l'exécution du traitement de service sur la requête de service ;
l'envoi, par l'unité de traitement de service, de la requête de service pour le nouveau service lancée par l'utilisateur CS qui a souscrit au nouveau service au serveur d'application correspondant du réseau IMS en vue de son traitement comprend : après la réception de la requête de service lancée par l'utilisateur CS qui a souscrit au nouveau service par le biais de l'unité d'interface CS, la détermination, par l'unité de traitement de service, que la requête de service est la requête de service pour le nouveau service, et l'envoi direct, en fonction du type de la requête de service pour le nouveau service, de la requête de service au serveur d'application correspondant dans un réseau IMS visité en vue de son traitement ; ou
après la réception de la requête de service lancée par l'utilisateur CS qui a souscrit au nouveau service par le biais de l'unité d'interface CS, la détermination, par l'unité de traitement de service, en fonction des données de souscription de l'utilisateur, que l'utilisateur a souscrit au nouveau service, et le routage de la requête de service à une CSCF dans le réseau IMS, et l'envoi, par la CSCF, en fonction du type de requête de service, de la requête de service au serveur d'application correspondant dans le réseau IMS en vue de son traitement, et si la requête de service est une requête de service vocal, l'envoi, par la CSCF, de la requête de service vocal à l'unité de traitement de service par le biais de l'unité d'interface IMS ; la détermination, par l'unité de traitement de service, que le service vocal est le nouveau service, et l'envoi de la requête de service au serveur d'application correspondant en vue de son traitement.

7. Dispositif de réseau selon la revendication 5, dans lequel l'exécution, par l'unité de traitement de service, d'un traitement sur le service existant lancé par l'utilisateur, comprend :
l'exécution, par l'unité de traitement de service, du traitement sur le service existant en fonction d'une logique de traitement de service existante du MSC-S d'origine.

8. Dispositif de réseau selon la revendication 5, dans lequel :
le dispositif de réseau comprend en outre une unité d'obtention (606), configurée pour : obtenir des données de service d'un service existant d'un utilisateur depuis un Enregistreur de Position de Rattachement, HLR, dans le réseau CS, et envoyer les données de service obtenues à l'unité de traitement de service, et l'unité de traitement de service exécute le traitement sur la requête de service en fonction des données de service reçues.

9. Système d'évolution de réseau coeur Commuté par Circuits, CS, comprenant :
un Serveur de Centre de Commutation de Services Mobiles, MSC-S, Rehaussé pour des Services Centralisés IMS, ICS, soit EMSC (402), dans lequel l'EMSC est obtenu en mettant à niveau un Serveur de Centre de Commutation de Services Mobiles, MSC-S, dans un réseau coeur CS et possède les fonctions d'un Serveur d'Application de Téléphonie, TAS, dans le réseau IMS, dans lequel la mise à niveau comprend le rehaussement d'une interface de communication entre l'EMSC et une Fonction de Commande de Session d'Appel, CSCF, dans le réseau IMS en fonction du MSC-S d'origine, dans lequel l'EMSC est capable de traiter des messages de Protocole de Lancement de Session, SIP, et fournit une logique de traitement de service du TAS dans le réseau IMS en utilisant une logique de traitement de service existante du MSC-S, et le système comprend en outre une Fonction de Commande de Session d'Appel, CSCF (404), d'un réseau à Sous-système Multimédia IP, IMS ;
la CSCF (404) dans le réseau IMS est configurée pour envoyer une requête de service vocal reçue depuis un utilisateur dans le réseau IMS à l'EMSC (402) ; et
l'EMSC (402) est configuré pour se connecter au réseau IMS et servir de TAS dans le réseau IMS pour fournir un service vocal à l'utilisateur dans le réseau IMS ; l'EMSC est configuré en outre pour : recevoir une requête de service envoyée par un utilisateur CS, exécuter le traitement de service sur la requête de service pour un service existant, et envoyer la requête de service pour un nouveau service à un serveur d'application correspondant dans le réseau IMS en vue de son traitement,
dans lequel la requête de service pour le service existant et la requête de service pour le nouveau service sont lancées par l'utilisateur CS qui a souscrit au nouveau service ; dans lequel
le service existant comprend un service qui peut être traité par l'EMSC en utilisant des fonctions du MSC-S d'origine, et le nouveau service comprend un nouveau service fourni par le réseau IMS.

10. Système d'évolution de réseau coeur CS selon la revendication 9, dans lequel :
le système comprend en outre un ou plusieurs MSC-S qui ne sont pas mis à niveau dans le réseau coeur CS, les un ou plusieurs MSC-S étant configurés pour envoyer la requête de service reçue lancée par l'utilisateur CS qui a souscrit au nouveau service à l'EMSC ; et
après la réception de la requête de service, l'EMSC envoie la requête de service pour le nouveau service au serveur d'application correspondant dans le réseau IMS en vue de son traitement, et renvoie la requête de service pour le service existant au MSC-S, et le MSC-S exécute le traitement sur la requête de service.

11. Système d'évolution de réseau coeur CS selon la revendication 9, dans lequel :
l'EMSC est un dispositif de réseau spécifié dans l'une quelconque des revendications 6 à 8.
